# EUROPÄISCHE PATENTSCHRIFT

(11) **EP 1 935 922 B1**
(45) Veröffentlichungstag und Bekanntmachung des Hinweises auf die Patenterteilung: **08.05.2013**
(21) Anmeldenummer: 07120232.9
(22) Anmeldetag: 08.11.2007
(51) Int. Cl.: C08G 77/46

(54) **Verfahren zur Herstellung von SiOC-verknüpften, linearen Polydimethylsiloxan-Polyoxyalkylen-Blockcopolymeren und ihre Verwendung**
Method for manufacturing SiOC-linked, linear polydimethyl siloxane polyoxyalkyl block copolymers and their application
Procédé de fabrication de transmission de SiOC, copolymères à blocs de polyoxyalkyles polydiméthylsiloxane linéaires et leur utilisation

(30) Priorität: 22.12.2006 DE 102006061350
(43) Veröffentlichungstag der Anmeldung: 25.06.2008
(73) Patentinhaber: Evonik Goldschmidt GmbH, 45127 Essen (DE)
(72) Erfinder: Knott, Wilfried, 45355 Essen (DE); Droese, Juergen, 45141 Essen (DE); Klein, Klaus-Dieter, 45481 Muelheim (DE); Landers, Rüdiger, 45257 Essen (DE); Windbiel, Dagmar, 45289 Essen (DE)

(56) Entgegenhaltungen:
- DE-A1- 10 312 636

## Beschreibung

Die Erfindung betrifft ein Verfahren zur Herstellung von SiOC-verknüpften, linearen Polydimethylsiloxan-Polyoxyalkylen-Blockcopolymeren mit sich wiederholenden (AB)-Einheiten.

Bei der Herstellung von Polyurethanweichschäumen werden dem Gemisch der Rohstoffe Polysiloxan-Polyoxyalkylen-Blockmischpolymerisate zugesetzt, welche vielfältige Aufgaben haben und u.a. die Ausbildung eines gleichmäßigen Porengefüges ermöglichen und den gebildeten Schaum bis zur Beendigung der Reaktion stabilisieren. Jedoch sind nicht alle Polysiloxan-Polyoxyalkylen-Blockmischpolymerisate in gleicher Weise geeignet. Um als Polyurethan-Schaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist. Es gibt dabei für den Aufbau eines möglichst wirksamen Schaumstabilisators eine Vielzahl von Variablen sowohl für den Polyoxyalkylenblock wie für den Polysiloxanblock:

Der Polyoxyalkylenblock kann aus verschiedenen Oxyalkyleneinheiten, vornehmlich aus Oxyethylen-, Oxypropylen- und Oxybutyleneinheiten zusammengesetzt sein. Dabei können das Gewichtsverhältnis dieser Einheiten zueinander, ihre Sequenz sowie das Molgewicht des Polyoxyalkylenblockes variiert werden. Von Bedeutung ist auch die Endgruppe des Polyoxyalkylenblockes, die in Bezug auf die Polyurethanbildung reaktiv (z.B. OH-Gruppe) oder inert (z.B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si-Bindung verknüpft sein. Dabei können auch unterschied-liche Polyoxyalkylenblöcke an den Polysiloxanblock gebunden sein.

Der Polysiloxanblock kann in Bezug auf Art und Anteil der Si-Einheiten variiert werden. Der Siloxanblock kann geradkettig oder verzweigt sein und unterschiedliches Molekulargewicht aufweisen. Die Polyoxyalkylenblöcke können end- und/oder seitenständig an den Polysiloxanblock gebunden sein.

Vorhersagen über Wirksamkeit eines Polysiloxan-Polyoxyalkylen-Blockmischpolymerisates als Schaumstabilisator können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Auffindung im Sinne der Polyurethanherstellung besonders wirksamer spezieller Strukturparameter und entsprechender Blockmischpolymerisate eine fortschrittsraffende und somit erfinderische Leistung dar.

Polysiloxan-Polyoxyalkylen-Blockmischpolymerisate, welche im durchschnittlichen Molekül unterschiedliche Polyoxyalkylenreste aufweisen, sind bereits wiederholt beschrieben worden. Aus der großen Anzahl entsprechender Veröffentlichungen sollen stellvertretend die folgenden Schriften genannt werden:

In der DE 10 2005 039 931.2 wird ein Verfahren zur Herstellung von SiOC-verknüpften, linearen Polydimethylsiloxan-Polyoxyalkylen-Blockcopolymeren mit sich wiederholenden (AB)-Einheiten beschrieben. Gemäß diesem Verfahren werden einer aus Aminosiloxan, Polyoxyalkylendiol und Solvens bestehenden Reaktionsmatrix bei erhöhten Temperaturen eine geringe Menge eines tertiären Amins wie z.B. aus der Reihe der aromatischen Amine (Pyridine, Pyrimidine, Pyridazin, Pyrazin, Chinolin, Imidazol, etc.) und/oder auch aus der Reihe der cycloaliphatischen Aminbasen (Chinuclidin, Diazabicyclo[2,2,2]octan, etc.) und hierbei insbesondere 1,8-Diazabicyclo[5,4,0]-undec-7-en hinzugesetzt und die Polykondensationsreaktion unter Freisetzung von Ammoniak bis zum angestrebten Molekulargewichtsaufbau gemäß der allgemeinen Reaktion =SiNH₂ + HOC≡ → ≡SiOC≡ + NH₃ durchgeführt.

Diese Verbindungen, ihre Verwendung zur Herstellung von Polyurethanschäumen sowie ein Verfahren zu ihrer Herstellung wird bereits in der US 3,836,560 beschrieben.

Diese Polyethersiloxane sind wertvolle grenzflächenaktive Additive zur Herstellung von Polyurethan-Schaumstoffen, wobei insbesondere ihre zellöffnende Wirkung in Etherschäumen oder offenzelligen Hartschäumen gefragt ist. Nachteilig erweist sich deren industrielle Synthese dadurch, dass sowohl die mit Salzanfall befrachtete Herstellung der Aminkomponente als auch das Kopplungsverfahren selbst aufwändig sind und z.T. mit problematischen, in der betrieblichen Praxis nicht einfach zu handhabbaren Verbindungen gearbeitet werden muß.

Eine Aufgabe der vorliegenden Erfindung war es daher, ein einfaches, ökonomisch sinnvolles Verfahren zu entwickeln, mit dem (AB)_{d}-Blockcopolymere mit verbesserten Eigenschaften herstellbar sind.

In der DE 103 12 636.8 wird ein Verfahren zur Umsetzung von ≡Si(H)-Einheiten enthaltenden verzweigten Polyorganosiloxanen mit wenigstens einem Alkohol beansprucht, welches dadurch gekennzeichnet ist, dass man in einem Verfahrensschritt unter Einsatz einer oder mehrerer Elementverbindungen der III. Haupt-und/oder der 3. Nebengruppe als Katalysator in den =Si(H)-Einheiten des Polyorganosiloxans vorhandene Wasserstoffatome teilweise oder vollständig durch Alkoholatreste der eingesetzten Alkohole ersetzt.

Der Lehre dieser Literaturstelle folgend, lassen sich auch teilsubstituierte Polyorganosiloxane herstellen, die neben den substituierten Si-O-C-Einheiten noch nicht umgesetzte ≡Si(H)-Einheiten aufweisen. Dazu wird das Stoffmengen-Verhältnis von SiH-Gruppen zu Alkoholgruppen vorzugsweise im Bereich von 1:0,1 bis zu 1:0,99 Moläquivalenten eingestellt.

Durch eine derartige Umsetzung in einem unterstöchiometrischen Verhältnis soll ein Rest an nicht umgesetzter Si-H-Funktion erhalten bleiben, der in einem darauffolgenden Schritt, beispielsweise in einer Hydrosilylierungsreaktion, bei der eine Silicium-Kohlenstoff-Bindung gebildet wird, umgesetzt werden kann, um gemischte Produkte herzustellen.

Überraschenderweise wurde nun gefunden, dass sich, abweichend von dem offenbarten Stand der Technik, ein Zugang zu hochmolekularen linearen SiOC-verknüpften Polydimethylsiloxan-Polyoxyalkylen-Blockcopolymeren mit sich wiederholenden (AB)-Einheiten erschließt, wenn man Polyetherdiole mit einem stöchiometrischen Überschuss α ,ω-Dihydrogen-polydimethylsiloxanen in Gegenwart einer oder mehrerer Elementverbindungen der III. Haupt- und/oder der 3. Nebengruppe als Katalysator zur Umsetzung bringt und dann die Reaktion nach vollständig erfolgter Umsetzung der Alkoholkomponente so lange weiterführt, bis keine ≡Si(H)-Gruppen gasvolumetrisch mehr nachweisbar sind. Die gasvolumetrische SiH-Wert-Bestimmung erfolgt durch die alkoholatinduzierte Zersetzung einer Probe nach etablierten Verfahren.

Für den Fachmann unvorhersehbar werden auf diese Weise Strukturen erhalten, die als Stabilisatoren bei der Herstellung von Polyurethanschäumen (PU-Schäume), insbesondere PU-Weichschäumen, sprunghaft bessere Eigenschaften aufweisen.

Ein Gegenstand der Erfindung ist daher ein Verfahren zur Herstellung von SiOC-verknüpften, linearen Polydimethylsiloxan-Polyoxyalkylen-Blockcopolymeren mit sich wiederholenden (AB)-Einheiten durch Umsetzung nach an sich bekannten Verfahren von Polyetherdiolen mit einem stöchiometrischen Überschuss α ,ω-Dihydrogen-polydimethylsiloxanen in Gegenwart einer oder mehrerer Elementverbindungen der III. Haupt- und/oder der 3. Nebengruppe als Katalysator, welches dadurch gekennzeichnet ist, dass die Reaktion nach vollständig erfolgter Umsetzung der Alkoholkomponente so lange weitergeführt wird, bis keine ≡Si(H)-Gruppen gasvolumetrisch mehr nachweisbar sind.

Ein weiterer Gegenstand der Erfindung sind SiOC-verknüpfte, lineare Polydimethylsiloxan-Polyoxyalkylen-Blockcopolymere hergestellt gemäß obigem Verfahren.

Ein weiterer Gegenstand der Erfindung ist die Verwendung der gemäß dem erfindungsgemäßen Verfahren hergestellten Verbindungen als grenzflächenaktive Additive zur Herstellung von Polyurethan-Etherschäumen.

Weitere Gegenstände der Erfindung sind durch die Ansprüche gekennzeichnet.

Die Siloxanblöcke A der Mischpolymeren repräsentieren in der Hauptsache lineare Siloxanpolymere oder Ketten mit sich wiederholenden Siloxaneinheiten, die durch die Summenformel (-R₂SiO-)_{b} dargestellt werden können.

Der Polyoxyalkylenblock (B) der linearen Blockmischpolymeren ist ein Oxyalkylenpolymer enthaltend die sich wiederholenden Oxyalkyleneinheiten (-CₙH(₂ₙ₋ₘ)R¹ₘO-)_{c}.

Das mittlere Molekulargewicht jedes Siloxanblocks (A) liegt zwischen ca. 650 bis 6500 g/mol, vorzugsweise 800 bis 1500 g/mol, besonders bevorzugt bei ca. 1000 bis 1200 g/mol.

Das mittlere Molekulargewicht jedes Polyoxyalkylenblocks der erfindungsgemäß hergestellten Mischpolymeren liegt zwischen etwa 600 und 10.000 g/mol, vorzugsweise 1.000 bis 5.000 g/mol.

Die Größe der einzelnen Oxyalkyleneinheiten oder Siloxanblöcke ist nicht notwendigerweise einheitlich, sondern kann innerhalb der angegebenen Grenzen beliebig variieren.

Die einzelnen Polyoxyalkyleneinheiten sind Additionsprodukte aus mindestens einem Oxyalkylenmonomer, ausgesucht aus der Gruppe Ethylenoxid, Propylenoxid, Butylenoxid Tetrahydrofuran, vorzugsweise Mischprodukte aus mindestens zwei Monomereinheiten, insbesondere aus Ethylenoxid und Propylenoxid.

Die Polyoxyalkylenblöcke bestehen im Wesentlichen aus Oxyethyleneinheiten oder Oxypropyleneinheiten, bevorzugt sind gemischte Oxyethylen- und Oxypropyleneinheiten mit einem Oxyethylenanteil von etwa 30 bis 70 Gew.-% und 70 bis 30 Gew.-% Oxypropylenanteil bezogen auf den Gesamtgehalt an Oxyalkyleneinheiten im Block.

Der gesamte Siloxanblockanteil (A) beträgt im Copolymer zwischen 20 und 50 Gew.-%, vorzugsweise 25 bis 40 Gew.-%, und der Anteil der Polyoxyalkylenblöcke zwischen 80 und 50 Gew.-% und das Blockcopolymer weist ein mittleres zahlengemitteltes Molekulargewicht Mn von mindestens 10.000 g/mol bis ca. 160.000 g/mol, vorzugsweise 15.000 g/mol bis ca. 100.000 g/mol, insbesondere 20.000 g/mol bis ca. 36.000 g/mol auf. Die Ermittlung der mittleren Molmassen basiert dabei auf den bekannten Methoden der GPC-Analytik.

Als wirksame Katalysatoren im Sinne der vorliegenden Erfindung sind unter den lewissauren Elementverbindungen der III. Hauptgruppe insbesondere borhaltige und/oder aluminiumhaltige Elementverbindung bevorzugt. Von den lewissauren Elementverbindungen der 3. Nebengruppe sind insbesondere scandiumhaltige, yttriumhaltige, lanthanhaltige und/oder lanthanoidhaltige Lewissäuren bevorzugt. Erfindungsgemäß werden die Elementverbindungen der III. Haupt- und/oder 3. Nebengruppe besonders bevorzugt als Halogenide, Alkylverbindungen, fluorhaltige, cycloaliphatische und/oder heterocyclische Verbindungen eingesetzt.

Eine bevorzugte Ausführungsform der Erfindung sieht vor, dass man als Elementverbindungen der III. Hauptgruppe einen borhaltigen Katalysator einsetzt, insbesondere Halogenide, Alkylverbindungen, fluorhaltige, cycloaliphatische und/oder heterocyclische Verbindungen einsetzt.

Eine bevorzugte Ausführungsform der Erfindung sieht vor, dass fluorierte und/oder nicht fluorierte Organoborverbindungen eingesetzt werden, insbesondere solche, die ausgewählt sind aus:
(C₅F₄) (C₆F₅)₂B; (C₅F₄)₃B; (C₆F₅) BF₂; BF (C₆F₅)₂; B (C₆F₅)₃; BCl₂(C₆F₅); BCl (C₆F₅)₂; B (C₆H₅) (C₆F₅)₂; B (Ph)₂(C₆F₅); [C₆H₄(MCF₃)]₃B; [C₆H₄(pOCF₃)]₃B; (C₆F₅) B (OH)₂; (C₆F₅)₂BOH; (C₆F₅)₂BH; (C₆F₅) BH₂; (C₇H₁₁) B (C₆F₅)₂; (C₈H₁₄B) (C₆F₅); (C₆F₅)₂B (OC₂H₅); (C₆F₅)₂B-CH₂CH₂Si (CH₃)₃; 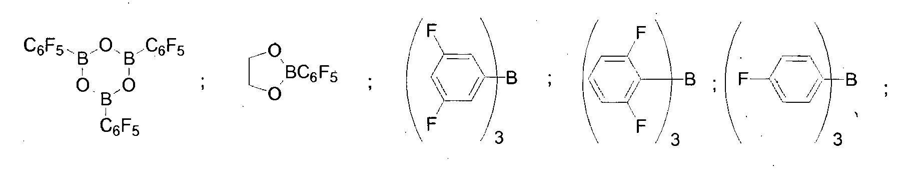 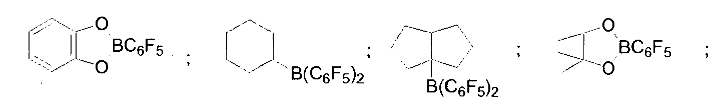 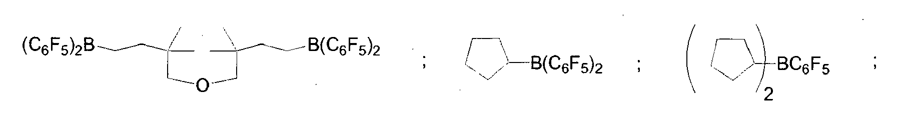 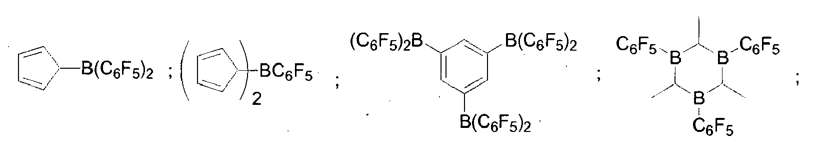 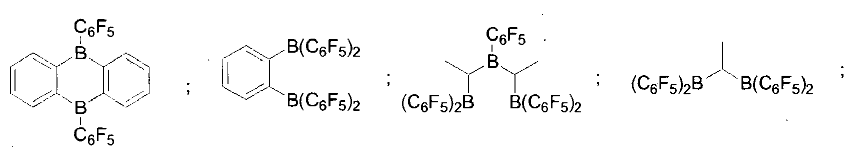
insbesondere Tris (Perfluortriphenylboran) [1109-15-5], Bortrifluorid-Etherat [109-63-7], Boran-Triphenylphosphinkomplex [2049-55-0], Triphenylboran [960-71-4], Triethylboran [97-94-9] und Bortrichlorid [10294-34-5], Tris(pentafluorophenyl)-Boroxin (9Cl) [223440-98-0], 4,4,5,5,-Tetramethyl-2-(pentafluorophenyl)-1,3,2-Dioxaborolan (9Cl) [325142-81-2], 2-(Pentafluorophenyl)-1,3,2-Dioxaborolan (9Cl) [336880-93-4], Bis(pentafluorophenyl)cyclohexylboran [245043-30-5], Di-2,4-cyclopentadien-1-yl(pentafluorophenyl)-Boran (9Cl) [336881-03-9], (Hexahydro-3a(1H)-pentalenyl) bis(pentafluorophenyl)boran (9Cl) [336880-98-9], 1,3-[2-[Bis(pentafluorophenyl)boryl]ethyl]tetramethyldisiloxan [336880-99-0], 2,4,6-Tris(pentafluorophenyl)borazin (7Cl, 8Cl, 9Cl) [1110-39-0], 1,2-Dihydro-2-(pentafluorophenyl)-1,2-azaborin (9Cl) [336880-94-5], 2-(Pentafluorophenyl)-1,3,2-benzodioxaborol (9Cl) [336880-96-7], Tris(4-trifluoromethoxyphenyl)boran [336880-95-6], Tris(3-trifluoromethylphenyl)boran [24455-00-3], Tris(4-fluorophenyl)boran [47196-74-7], Tris(2,6-difluorophenyl)boran [146355-09-1], Tris(3,5-difluorophenyl)boran [154735-09-8], Methyliumtriphenyltetrakis(pentafluorophenyl)borat [136040-19-2], N,N-Dimethylaniliniumtetrakis(pentyfluorophenyl)borat sowie Gemische der vorstehenden Katalysatoren.

Eine weitere bevorzugte Ausführungsform der Erfindung sieht vor, dass fluorierte und/oder nicht fluorierte Organoaluminiumverbindungen eingesetzt werden, insbesondere solche, die ausgewählt sind aus:
AlCl3 [7446-70-0], Aluminiumacetylacetonat [13963-57-0], AlF3 [7784-18-1], Aluminiumtrifluormethansulfonat [74974-61-1], Dii-Butylaluminiumchlorid [1779-25-5], Di-i-Butylaluminiumhydrid [1191-15-7], Triethylaluminium [97-93-8] sowie deren Gemische.

Eine weitere bevorzugte Ausführungsform der Erfindung sieht vor, dass fluorierte und/oder nicht fluorierte Organoscandiumverbindungen eingesetzt werden, insbesondere solche, die ausgewählt sind aus:
Scandium(III)chlorid [10361-84-9], Scandium(III)fluorid [13709-47-2], Scandium(III)hexafluoroacetylacetonat [18990-42-6], Scandium(III)trifluormethansulfonat [144026-79-9], Tris(cyclopentadienyl)scandium [1298-54-0] sowie deren Gemische.

Eine weitere bevorzugte Ausführungsform der Erfindung sieht vor, dass fluorierte und/oder nicht fluorierte Organoyttriumverbindungen eingesetzt werden, insbesondere solche, die ausgewählt sind aus:
Tris(cyclopentadienyl)yttrium [1294-07-1], Yttrium(III)chlorid [10361-92-9], Yttrium(III)fluorid [13709-49-4], Yttrium(III)-hexafluoroacetylacetonat [18911-76-7], Yttrium(III)naphthenat [61790-20-3] sowie deren Gemische.

Eine weitere bevorzugte Ausführungsform der Erfindung sieht vor, dass fluorierte und/oder nicht fluorierte Organolanthanverbindungen eingesetzt werden, insbesondere solche, die ausgewählt sind aus:
Lanthan(III)chlorid [10099-58-8], Lanthan(III)fluorid [13709-38-1], Lanthan(III)iodid [13813-22-4], Lanthan(III)trifluormethansulfonat [52093-26-2], Tris(cyclopentadienyl)lanthan [1272-23-7] sowie deren Gemische.

Eine weitere bevorzugte Ausführungsform der Erfindung sieht vor, dass fluorierte und/oder nicht fluorierte Organolanthanoidverbindungen eingesetzt werden, insbesondere solche, die ausgewählt sind aus:
Cer(III)bromid [14457-87-5], Cer(III)chlorid [7790-86-5], Cer(III)fluorid [7758-88-5], Cer(IV)fluorid [60627-09-0], Cer(III)trifluoracetylacetonat [18078-37-0], Tris(cyclopentadienyl)cer [1298-53-9], Europium(III)fluorid [13765-25-8], Europium(II)chlorid [13769-20-5], Praesodym(III)hexafluoroacetylacetonat [47814-20-0], Praesodym(III)fluorid [13709-46-1], Praesodym(III)trifluoracetylacetonat [59991-56-9], Samarium(III)chlorid [10361-82-7], Samarium(III)fluorid [13765-24-7], Samarium(III)naphthenat [61790-20-3], Samarium(III)-trifluoracetylacetonat [23301-82-8], Ytterbium(III)fluorid [13760-80-8], Ytterbium(III)trifluormethansulfonat [54761-04-5], Tris(cyclopentadienyl)ytterbium [1295-20-1] sowie deren Gemische.

Dabei kann der Katalysator homogen oder als heterogener Katalysator eingesetzt werden. Ebenso ist eine Ausgestaltung als homogenisierte heterogene bzw. heterogenisierte homogene Katalyse im Sinne der Erfindung möglich.

Die Katalysatoren werden üblicherweise in Mengen von ca. 0,01 bis ca. 0,2 Gew.-%, vorzugsweise 0,03 bis 0,10 Gew.-%, bezogen auf vorgelegtes Wasserstoffsiloxan und Polyether, eingesetzt.

Das molare Verhältnis von α,ω-Wasserstoffsiloxanen zu Polyetherdiolen liegt im Bereich von 1,10 bis 2,00, vorzugsweise 1,25 bis 1,55, insbesondere 1,35 bis 1,45.

Das erfindungsgemäße Verfahren wird im Allgemeinen ausgeführt durch Umsetzung von -Si(H)-Einheiten enthaltenden Polyorganosiloxanen der allgemeinen Formel (II) 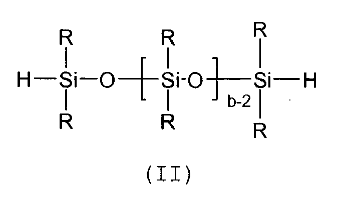 worin bedeuten:
- R: unabhängig voneinander monovalente C₁- bis C₁₈-, vorzugsweise C₁- bis C₄-Kohlenwasserstoffreste, insbesondere Methylreste,
- b: 8 bis 80, vorzugsweise 10 bis 50, besonders bevorzugt 10 bis 25,
mit wenigstens einem Alkohol, der ausgewählt ist aus der Gruppe der Poloyetherdiole mit der allgemeinen Formel (III)

HO- (CₙH(₂ₙ₋ₘ)R¹ₘO-) ₓ-H (III)

enthalten, worin
- R¹: unabhängig voneinander C₁- bis C₄-Alkylreste, vorzugsweise Methyl- und Ethylreste,
- n: 2 bis 4,
- m: 0 oder 1,
- x: einen Wert von 1 bis 200, vorzugsweise 10 bis 100, insbesondere 35 bis 60, hat,
wobei
die Oxyalkylensegmente - (CₙH₍₂ₙ₋ₘ₎R¹ₘO-) innerhalb eines Oxyalkylenetherrestes untereinander verschieden sein können, sowie die Reihenfolge der einzelnen Segmente (CₙH₍₂ₙ₋ₘ₎R¹ₘO-)beliebig sein kann und insbesondere Blockcopolymere, statistische Polymere sowie deren Kombinationen umfasst.

Erfindungsgemäß bevorzugt sind Polyetherdiole, in denen Ethylenoxid (EO) und Propylenoxyd (PO) als Copolymerisate vorliegen. Besonders bevorzugt sind EO/PO-Copolymerisate, die blockartigen Aufbau besitzen und einen EO-Anteil von ca. 30 bis 70 Gew.-%, bezogen auf den Gesamtgehalt an Oxyalkyleneinheiten, enthalten.

Eine besonders empfindliche und aussagekräftige Bewertung der erfindungsgemäßen Verbindungen ermöglicht der anwendungstechnische Test, bei dem das gewonnene Copolymer als Schaumstabilisator in Polyurethanformulierungen zur Herstellung von insbesondere Etherschäumen oder offenzelligen Hartschäumen eingebracht wird. Strukturelle Defizite im Schaumstabilisator geben sich bei der Verschäumung in technisch unzureichendem Verhalten, also beispielsweise Schrumpf bzw. Kollaps, zu erkennen.

### Herstellungsbeispiele:

Die Herstellung der nach dem erfindungsgemäßen Verfahren beanspruchten SiOC-verknüpften, linearen Polydimethylsiloxan-Polyoxyalkylen-Blockcopolymeren kann wahlweise mit oder ohne den Einsatz eines geeigneten Lösungsmittels erfolgen. Werden hochmolekulare und damit einhergehend hochviskose SiOC-verknüpfte Copolymere angestrebt, so kann deren Herstellung im Sinne ihrer guten Handhabbarkeit während und nach der Synthese zweckmäßigerweise durch die Umsetzung des jeweiligen Polyetherdiols mit dem jeweiligen α,ω-Wasserstoffsiloxan in einem geeigneten Lösungsmittel stattfinden. Geeignete Solventien sind Alkane, Cycloalkane, Alkylaromaten u.ä., wobei insbesondere hochsiedende Lösungsmittel mit Siedepunkten > 120°C bevorzugt sind.

Die Reaktionspartner, bestehend aus mindestens einem Polyetherdiol und einem oder mehreren α,ω-Wasserstoffsiloxanen, eventuell unter Einbeziehung eines Lösungsmittels, können prinzipiell unter inniger Durchmischung bei erhöhter Temperatur gemeinsam vorgelegt und durch Zugabe einer ausreichenden Menge eines erfindungsgemäßen Katalysators zur Umsetzung gebracht werden oder aber auch sequentiell der Reaktion zugeführt werden. Hierbei ist insbesondere eine Fahrweise bevorzugt, bei der das Polyetherdiol oder die Polyetherdiolmischung in einem hochsiedenden Solvens bei erhöhter Temperatur zunächst mit einer kleinen Menge des erfindungsgemäßen mitverwendeten Katalysators und dann unter guter Durchmischung dosierkontrolliert mit dem α,ω-Wasserstoffsiloxan oder einer Mischung aus einem oder mehreren α,ω-Wasserstoffsiloxanen beaufschlagt wird. Die unter Gasfreisetzung erfolgende Herstellung der erfindungsgemäß beanspruchten Copolymeren läßt sich auf diese Weise vorzüglich kontrollieren und steuern. Die einzelnen Komponenten können zur Steuerung der Struktur des Endproduktes auch sequentiell zugesetzt werden.

Das molare Verhältnis von α,ω-Wasserstoffsiloxanen zu Polyetherdiolen liegt im Bereich von 1,10 bis 2,00, vorzugsweise 1,25 bis 1,55, insbesondere 1,35 bis 1,45.

Die Katalysatoren werden üblicherweise in Mengen von ca. 0,01 bis ca. 0,2 Gew.-%, vorzugsweise 0,03 bis 0,10 Gew.-%, bezogen auf vorgelegtes Wasserstoffsiloxan und Polyether, eingesetzt.

Die Reaktionstemperatur zur Herstellung der erfindungsgemäßen Copolymeren sollte bei 60°C bis 140°C, bevorzugt bei 100°C bis 120°C, liegen.

### Beispiel 1: erfindungsgemäß

In einem 500-ml-Vierhalskolben, ausgerüstet mit KPG-Rührer, Tropftrichter, Innenthermometer, Rückflusskühler mit Gasableitungsschlauch, werden 55,0 g eines Polyoxyalkylendiols mit einem mittleren Molgewicht von 2.800 g/mol und einem Ethylenoxid/Propylenoxid-Verhältnis von ca. 1:1 zusammen mit 85,3 g eines linearen Alkylbenzols mit einem Siedebereich von ca. 280 bis 230°C vorgelegt. Nun werden 85,3 mg Tris(pentafluorophenyl)boran (1000 ppm bezogen auf die Gesamtmenge der Reaktanden) hinzugegeben und der Ansatz wird auf 110°C erwärmt. Nach Erreichen der Reaktionstemperatur werden 30,3 g eines α,ω-Wasserstoffsiloxans (mittlere Kettenlänge N=15) im 35 %igen Überschuss, bezogen auf den eingesetzten Polyether, so zugetropft, dass die sofort einsetzende Wasserstoffentwicklung gut zu kontrollieren ist. Nach Zugabe der stöchiometrischen Siloxanmenge wird ein deutlicher Viskositätsanstieg beobachtet. Das Ende der Reaktion läßt sich eindeutig an der nachlassenden Gasentwicklung feststellen. Gasvolumetrische SiH-Bestimmung belegt einen vollständigen Umsatz.

### Beispiel 2: nicht erfindungsgemäß

In einem 500-ml-Vierhalskolben, ausgerüstet mit KPG-Rührer, Tropftrichter, Innenthermometer, Rückflusskühler mit Gasableitungsschlauch, werden 55,0 g eines Polyoxyalkylendiols mit einem mittleren Molgewicht von 2.800 g/mol und einem Ethylenoxid/Propylenoxid-Verhältnis von ca. 1:1 zusammen mit 77,5 g eines linearen Alkylbenzols mit einem Siedebereich von ca. 280 bis 230°C vorgelegt. Nun werden 77,5 mg Tris(pentafluorophenyl)boran (1000 ppm bezogen auf die Gesamtmenge der Reaktanden) hinzugegeben und der Ansatz wird auf 110°C erwärmt. Nach Erreichen der Reaktionstemperatur werden 22,5 g (Äquivalenzmenge bezogen auf eingesetztes Polyoxyalkylendiol) eines α,ω-Wasserstoffsiloxans (mittlere Kettenlänge N=15) so zugetropft, dass die sofort einsetzende Wasserstoffentwicklung gut zu kontrollieren ist. Nach beendeter Zugabe wird ein deutlicher Viskositätsanstieg beobachtet. Das Ende der Reaktion läßt sich eindeutig an der nachlassenden Gasentwicklung feststellen. Gasvolumetrische SiH-Bestimmung belegt einen vollständigen Umsatz.

### Beispiel 3: erfindungsgemäß

In einem 500-ml-Vierhalskolben, ausgerüstet mit KPG-Rührer, Tropftrichter, Innenthermometer, Rückflusskühler mit Gasableitungsschlauch, werden 55,0 g eines Polyoxyalkylendiols mit einem mittleren Molgewicht von 2.800 g/mol und einem Ethylenoxid/Propylenoxid-Verhältnis von ca. 1:1 zusammen mit 85,3 g eines linearen Alkylbenzols mit einem Siedebereich von ca. 280 bis 230°C vorgelegt. Nun werden 85,3 mg Tris(pentafluorophenyl)boran hinzugegeben und der Ansatz wird auf 110°C erwärmt. Nach Erreichen der Reaktionstemperatur werden 32,6 g eines α,ω-Wasserstoffsiloxans (mittlere Kettenlänge N=15) im 45 %igen Überschuss, bezogen auf den eingesetzten Polyether, so zugetropft, dass die sofort einsetzende Wasserstoffentwicklung gut zu kontrollieren ist. Nach Zugabe der stöchiometrischen Siloxanmenge wird ein deutlicher Viskositätsanstieg beobachtet. Das Ende der Reaktion läßt sich eindeutig an der nachlassenden Gasentwicklung feststellen. Gasvolumetrische SiH-Bestimmung belegt einen vollständigen Umsatz.

### Beispiel 4: erfindungsgemäß

In einem 500-ml-Vierhalskolben, ausgerüstet mit KPG-Rührer, Tropftrichter, Innenthermometer, Rückflusskühler mit Gasableitungsschlauch, werden 41,3 g eines Polyoxyalkylendiols mit einem mittleren Molgewicht von 2.800 g/mol und einem Ethylenoxid/Propylenoxid-Verhältnis von ca. 1:1 zusammen mit 75,0 g eines linearen Alkylbenzols mit einem Siedebereich von ca. 280 bis 230°C vorgelegt. Nun werden 75,0 mg Tris(pentafluorophenyl)boran (1000 ppm bezogen auf die Gesamtmenge der Reaktanden) hinzugegeben und der Ansatz wird auf 110°C erwärmt. Nach Erreichen der Reaktionstemperatur werden 33,7 g eines α,ω-Wasserstoffsiloxans (mittlere Kettenlänge N=15) im 100%igen Überschuss, bezogen auf das eingesetzte Polyetherdiol, so zugetropft, dass die sofort einsetzende Wasserstoffentwicklung gut zu kontrollieren ist. Nach Zugabe der stöchiometrischen Siloxanmenge wird ein deutlicher Viskositätsanstieg beobachtet, der bei Zugabe des letzten 20 % Siloxan wieder abnimmt. Das Ende der Reaktion läßt sich eindeutig an der nachlassenden Gasentwicklung feststellen.

Ausprüfung der nach erfindungsgemäßen Verfahren gewonnenen Polydimethylsiloxan-Polyoxyalkylen-Blockcopolymeren als Schaumstabilisator:

Der anwendungstechnische Test bedient sich der typischen Formulierung eines Etherschaums, die sich wie folgt zusammensetzt:

| Gew.-Teile | Rezepturbestandteile |
|---|---|
| 0,07 | Kosmos^{®} 29 (Zinn(II)-2-ethylhexanoat) der Firma Goldschmidt GmbH |
| 30 | Polyol CP 3322 (marktübliches Polyol) der Firma DOW |
| 70 | Polyol CP 755 (marktübliches Polyol) der Firma DOW |
| 7 | Polyol CP 1421 (marktübliches Polyol) der Firma DOW |
| 1,95 | Wasser |
| 0,20 | Tegoamin^{®} BDE (Bis(dimethylamino-ethyl)etherlösung) der Firma Goldschmidt GmbH |
| 0,30 | Tegoamin^{®} 33(Triethylendiaminlösung) |
| 0,20 | Tegoamin^{®} DMEA (Dimethylethanolaminlösung) |
| 1,20 | des zu testenden Schaumstabilisators |
| 40,30 | Toluylendiisocyanat (TDI 80) (entsprechend einem Index von 85). |

### Durchführung der Ausprüfung der zu testenden Schaumstabilisatoren:

In einem Pappbecher werden der Zinnkatalysator Zinn(II)-2-ethylhexanoat, die drei Polyole, das Wasser und die drei Aminkatalysatoren vorgelegt und für 60 s mit einem Scheibenrührer bei 1.000 U/min vermischt. Anschließend wird das Isocyanat zugegeben und mit dem gleichen Rührer für 7 s bei 1.500 U/min eingearbeitet. Dabei beginnt die Mischung im Becher aufzuschäumen. Deshalb wird sie direkt nach dem Ende des Rührens in eine Verschäumungsbox gegossen. Diese hat eine Grundfläche von 17 x 17 cm und eine Höhe von 30 cm. Nach außen verhindert eine 5 cm dicke Isolierung aus PU-Schaum ein zu schnelles Abkühlen. Innen ist die Box mit einer Kunststofffolie ausgelegt, um den ausgehärteten Schaum anschließend entnehmen zu können. Der Schaum steigt nach dem Eingießen in der Verschäumungsbox auf. Im Idealfall bläst der Schaum bei Erreichen der maximalen Steighöhe ab und sackt dann leicht zurück. Dabei öffnet sich die Zellmembrane der Schaumbläschen und eine offenporige Zellstruktur des Schaumstoffs wird erhalten. Bei einer zu geringen Stabilisierungswirkung kollabiert der PU-Schaum vor Erreichen der maximalen Steighöhe. Im Falle einer zu starken Stabilisierung steigt der Schaum sehr lange und bläst nicht ab. Bedingt durch die dann sehr geschlossene Zellstruktur schrumpft der Schaum beim anschließenden Abkühlen durch die Volumenkontraktion des sich abkühlenden Gases.

### Ergebnisse der Verschäumungen der Reaktionsprodukte der vorab genannten Ausführungsbeispiele:

### Beobachtung bei Beispiel 1 (erfindungsgemäß):

Der Schaum steigt auf, bläst nach ca. 2 min ab und verändert sich beim nachfolgenden Abkühlen nicht. Bei der nachfolgenden Untersuchung werden eine Zellzahl von 10 Zellen/cm und eine Porosität von 70 mm gemessen (Staudruckmessung, ermittelt wird die Höhe einer Wassersäule, die einen äquivalenten Druck erzeugt). Dies veranschaulicht eine ausreichend feine und offene Zellstruktur (von geschlossenen Schäumen spricht man ab etwa 300 mm Wassersäule). Der Schaum weist die gewünschten Etherschaum-Eigenschaften auf. Der Schaumstabilisator des Beispiels 1 ist für die Herstellung dieses Schaumtyps geeignet.

### Beobachtung bei Beispiel 2 (nicht erfindungsgemäß):

Der Schaum steigt auf und bläst nicht ab. Stattdessen steigt der Schaum lange nach (> 3 min). Beim nachfolgenden Abkühlen schrumpft der Schaum stark. Eine Messung der physikalischen Eigenschaften kann aufgrund des Schrumpfs nicht erfolgen. Der Schaumstabilisator dieses Beispiels ist für die Herstellung eines Etherschaumstoffs ungegeignet.

## Patentansprüche

1. Verfahren zur Herstellung von SiOC-verknüpften, linearen Polydimethylsiloxan-Polyoxyalkylen-Blockcopolymeren mit sich wiederholenden (AB)-Einheiten durch Umsetzung nach an sich bekannten Verfahren von Polyetherdiolen mit einem stöchiometrischen Überschuss α,ω-Dihydrogen-polydimethyl-siloxanen in Gegenwart einer oder mehrerer Elementverbindungen der III. Haupt- und/oder der 3. Nebengruppe als Katalysator, **dadurch gekennzeichnet, dass** die Reaktion nach vollständig erfolgter Umsetzung der Alkoholkomponente so lange weitergeführt wird, bis keine =Si (H) -Gruppen gasvolumetrisch mehr nachweisbar sind.

2. Verfahren zur Herstellung von SiOC-verknüpften, linearen Polydimethylsiloxan-Polyoxyalkylen-Blockcopolymeren gemäß Anspruch 1, **dadurch gekennzeichnet, dass** das molare Verhältnis von α,ω-Wasserstoffsiloxanen zu Polyetherdiolen im Bereich von 1,10 bis 2,00 liegt.

3. Verfahren zur Herstellung von SiOC-verknüpften, linearen Polydimethylsiloxan-Polyoxyalkylen-Blockcopolymeren gemäß Anspruch 1, **dadurch gekennzeichnet, dass** die Reaktion bei Temperaturen von 60°C bis 140°C durchgeführt wird.

4. Verfahren zur Herstellung von SiOC-verknüpften, linearen Polydimethylsiloxan-Polyoxyalkylen-Blockcopolymeren gemäß Anspruch 2, **dadurch gekennzeichnet, dass** man als Elementverbindungen der III. Hauptgruppe einen borhaltigen und/oder aluminiumhaltigen Katalysator und/oder als Elementverbindungen der 3. Nebengruppe einen scandiumhaltigen, yttriumhaltigen, lanthanhaltigen und/oder lanthanoidhaltigen Katalysator einsetzt.

5. Verfahren zur Herstellung von SiOC-verknüpften, linearen Polydimethylsiloxan-Polyoxyalkylen-Blockcopolymeren gemäß Patentanspruch 1, **dadurch gekennzeichnet, dass** man einen Katalysator einsetzt, der ausgewählt ist aus der Gruppe:
(C₅F₄) (C₆F₅)₂B; (C₅F₄)₃B; (C₆F₅)BF₂; BF(C₆F₅)₂; B(C₆F₅)₃; BCl₂(C₆F₅); BCl(C₆F₅)₂; B(C(H₅) (C₆F₅)₂; B(Ph)₂(C₆F₅); [C₆H₄ (mCF₃) ₂] ₃B; [C₆H₄(pOCF₃)₂]₃B; (C₆F₅)B(OH)₂; (C₆F₅)₂BOH; (C₆F₅) ₂BH; (C₆F₅) BH₂; (C₇H₁₁) B (C₆F₅) ₂; (C₈H₁₄B)(C₆F₅); (C₆F₅)₂B(OC₂H₅); (C₆F₅)₂B-CH₂CH₂Si(CH₃)₃. 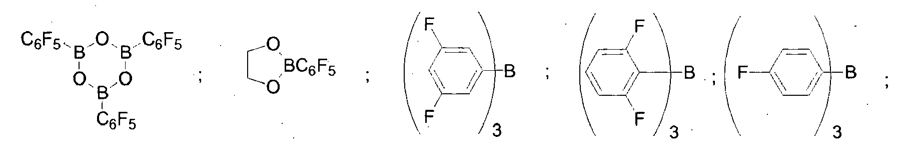 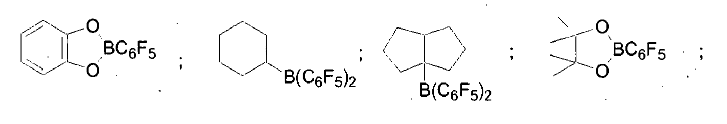 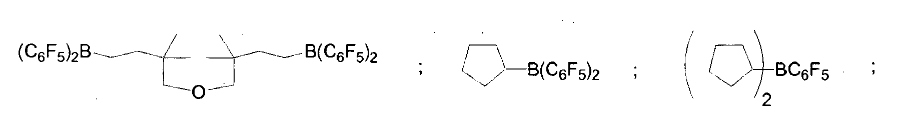 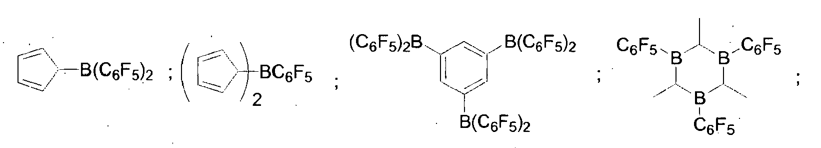 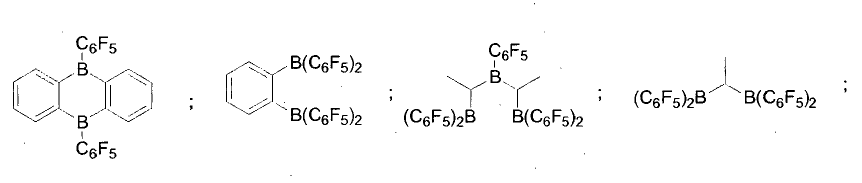 insbesondere Tris (Perfluortriphenylboran) [1109-15-5], Bortrifluorid-Etherat [109-63-7], Boran-Triphenylphosphinkomplex [2049-55-0], Triphenylboran [960-71-4], Triethylboran [97-94-9] und Bortrichlorid [10294-34-5], Tris(pentafluorophenyl)-Boroxin (9Cl) [223440-98-0], 4,4,5,5,-Tetramethyl-2-(pentafluorophenyl)-1,3,2-Dioxaborolan (9Cl) [325142-81-2], 2-(Pentafluorophenyl)-1,3,2-Dioxaborolan (9Cl) [336880-93-4], Bis(pentafluorophenyl)cyclohexylboran [245043-30-5], Di-2,4-cyclopentadien-1-yl(pentafluorophenyl)-Boran (9Cl) [336881-03-9], (Hexahydro-3a(1H)-pentalenyl) bis(pentafluorophenyl)boran (9Cl) [336880-98-9], 1,3-[2-[Bis(pentafluorophenyl)boryl]ethyl]tetramethyldisiloxan [336880-99-0], 2,4,6-Tris(pentafluorophenyl)borazin (7Cl, 8Cl, 9Cl) [1110-39-0], 1,2-Dihydro-2-(pentafluorophenyl)-1,2-azaborin (9Cl) [336880-94-5], 2-(Pentafluorophenyl)-1,3,2-benzodioxaborol (9Cl) [336880-96-7], Tris(4-trifluoromethoxyphenyl)boran [336880-95-6], Tris(3-trifluoromethylphenyl)boran [24455-00-3], Tris(4-fluorophenyl)boran [47196-74-7], Tris(2,6-difluorophenyl)boran [146355-09-1], Tris(3,5-difluorophenyl)boran [154735-09-8], Methyliumtriphenyltetrakis(pentafluorophenyl)borat [136040-19-2], N,N-Dimethylaniliniumtetrakis(pentyfluorophenyl)borat sowie Gemische der vorstehenden Katalysatoren.

6. Verfahren zur Herstellung von SiOC-verknüpften, linearen Polydimethylsiloxan-Polyoxyalkylen-Blockcopolymeren gemäß Anspruch 1, **dadurch gekennzeichnet, dass** der Katalysator in Mengen von 0,01 bis 0,2 Gew.-%, bezogen auf vorgelegtes Wasserstoffsiloxan und Polyether, eingesetzt wird.

7. Verfahren zur-Herstellung von SiOC-verknüpften, linearen Polydimethylsiloxan-Polyoxyalkylen-Blockcopolymeren gemäß Anspruch 1, **dadurch gekennzeichnet, dass** das mittlere Molekulargewicht jedes Siloxanblocks (A) (-R₂SiO-)_{b}, mit R = CH₃- zwischen 650 bis 6000 g/mol liegt.

8. Verfahren zur Herstellung von SiOC-verknüpften, linearen Polydimethylsiloxan-Polyoxyalkylen-Blockcopolymeren gemäß Anspruch 1, **dadurch gekennzeichnet, dass** das mittlere Molekulargewicht der Siloxanblöcke (X) (-R₂SiO-)ₐ, (Y) (-R₂SiO-)ₑ mit R = CH₃- unabhängig voneinander zwischen 74 bis 518 g/mol und das Molekulargewicht von X + Y zwischen 148 und 3000 g/mol liegt.

9. Verfahren zur Herstellung von SiOC-verknüpften, linearen Polydimethylsiloxan-Polyoxyalkylen-Blockcopolymeren gemäß Anspruch 1, **dadurch gekennzeichnet, dass** der Polyoxyalkylenblock(B) (-CₙH₍₂ₙ₋₁)R¹ₘO-)_{c} gemischte Oxyethylen- und Oxypropyleneinheiten mit einem Oxyethylenanteil von etwa 30 bis 70 Gew.-% und 70 bis 30 Ges.-% Oxypropylenanteil, bezogen auf den Gesamtgehalt an Oxyalkyleneinheiten im Block, enthält.

10. Verfahren zur Herstellung von SiOC-verknüpften, linearen Polydimethylsiloxan-Polyoxyalkylen-Blockcopolymeren gemäß Anspruch 1, **dadurch gekennzeichnet, dass** das mittlere Molekulargewicht jedes Polyoxyalkylenblocks (B) (CₙH₍₂ₙ₋₁)R¹ₘO)_{c} zwischen etwa 600 und 10.000 g/mol liegt.

11. Verfahren zur Herstellung von SiOC-verknüpften, linearen Polydimethylsiloxan-Polyoxyalkylen-Blockcopolymeren gemäß Anspruch 1, **dadurch gekennzeichnet, dass** der Anteil der Siloxanblöcke A im Gesamt-Copolymer zwischen 20 und 50 Gew.-% beträgt.

12. Verfahren zur Herstellung von SiOC-verknüpften, linearen Polydimethylsiloxan-Polyoxyalkylen-Blockcopolymeren gemäß Anspruch 1, **dadurch gekennzeichnet, dass** das Blockcopolymer ein mittleres Molekulargewicht von 10.000 g/mol bis ca. 1600.000 g/mol aufweist.

13. SiOC-verknüpfte, lineare Polydimethylsiloxan-Polyoxyalkylen-Blockcopolymere mit sich wiederholenden (AB)-Einheiten, hergestellt nach einem Verfahren gemäß mindestens einem der Ansprüche 1 bis 12.

14. Verwendung der SiOC-verknüpften, linearen Polydimethylsiloxan-Polyoxyalkylen-Blockcopolymeren gemäß Anspruch 13 als grenzflächenaktive Additive zur Herstellung von Polyurethan-Etherschäumen.

## Claims

1. Process for the preparation of SiOC-linked, linear polydimethylsiloxane-polyoxyalkylene block copolymers having (AB) repeat units, via reaction by methods known per se of polyetherdiols with a stoichiometric excess of α,ω-dihydropolydimethyl-siloxanes, in the presence of one or more compounds of elements of main group III and/or of transition group 3 as catalyst, **characterized in that**, after completed reaction of the alcohol component, the reaction is continued until no remaining =Si(H) groups are detectable by a gas-volumetric method.

2. Process for the preparation of SiOC-linked, linear polydimethylsiloxane-polyoxyalkylene block copolymers according to Claim 1, **characterized in that** the molar ratio of α,ω-hydrosiloxanes to polyetherdiols is in the range from 1.10 to 2.00.

3. Process for the preparation of SiOC-linked, linear polydimethylsiloxane-polyoxyalkylene block copolymers according to Claim 1, **characterized in that** the reaction is carried out at temperatures of from 60°C to 140°C.

4. Process for the preparation of SiOC-linked, linear polydimethylsiloxane-polyoxyalkylene block copolymers according to Claim 2, **characterized in that** the compounds used of elements of main group III comprise a boron-containing and/or aluminum-containing catalyst, and/or the compounds used of elements of transition group 3 comprise a scandium-containing, yttrium-containing, lanthanum-containing, and/or lanthanoid-containing catalyst.

5. Process for the preparation of SiOC-linked, linear polydimethylsiloxane-polyoxyalkylene block copolymers according to Claim 1, **characterized in that** a catalyst is used selected from the group of:
(C₅F₄) (C₆F₅) ₂B; (C₅F₄)₃B; (C₆F₅)BF₂; BF(C₆F₅)₂; B(C₆F₅)3; BCl₂(C₆F₅); BCl(C₆F₅)₂; B(C₆H₅) (C₆F₅)₂; B(Ph)₂(C₆F₅); [C₆H₄(mCF₃)₂]₃B; [C₆H₄(pOCF₃)₂]₃B; (C₆F₅)B(OH)₂; (C₆F₅)₂BOH; (C₆F₅)₂BH; (C₆F₅)BH₂; (C₇H₁₁) B (C₆F₅) ₂; (C₈H₁₄B) (C₆F₅) (C₆F₅) ₂B (OC₂H₅) ; (C₆F₅)₂B-CH₂CH₂Si (CH₃)₃. 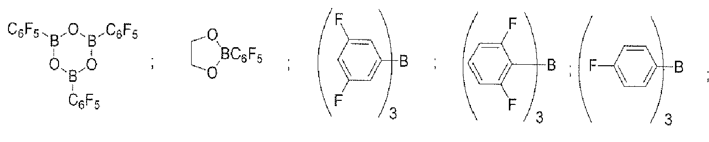 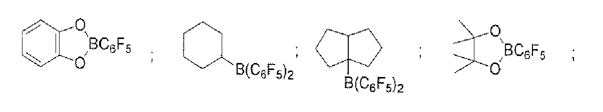 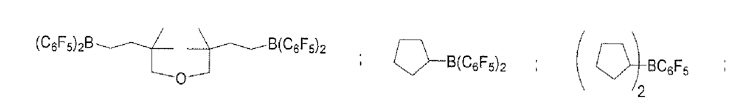 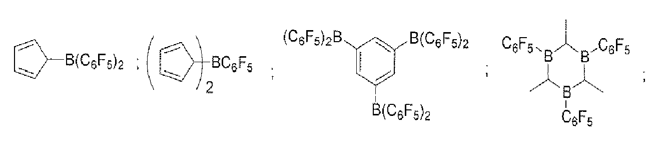 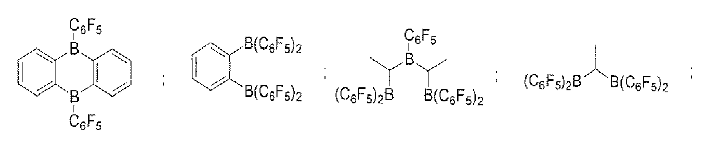 in particular tris(perfluorotriphenylborane) [1109-15-5], boron trifluoride etherate [109-63-7], borane triphenylphosphine complex [2049-55-0], triphenylborane [960-71-4], triethylborane [97-94-9] and boron trichloride [10294-34-5], tris(pentafluorophenyl)boroxin (9Cl) [223440-98-0], 4,4,5,5-tetramethyl-2-(pentafluorophenyl)-1,3,2-dioxaborolane (9Cl) [325142-81-2], 2-(pentafluorophenyl)-1,3,2-dioxaborolane (9Cl) [336880-93-4], bis(pentafluorophenyl)cyclohexylborane [245043-30-5], di-2,4-cyclopentadien-1-yl(pentafluorophenyl)borane (9Cl) [336881-03-9], (hexahydro-3a(1H)pentalenyl)bis(pentafluorophenyl)borane (9Cl) [336880-98-9], 1,3-[2-[bis(pentafluorophenyl)boryl]ethyl]tetramethyldisiloxane [336880-99-0], 2,4,6-tris(pentafluorophenyl)borazine (7Cl, 8Cl, 9Cl) [1110-39-0], 1,2-dihydro-2-(pentafluorophenyl)-1,2-azaborine (9Cl) [336880-94-5], 2-(pentafluorophenyl)-1,3,2-benzodioxaborole (9Cl) [336880-96-7], tris(4-trifluoromethoxyphenyl)borane [336880-95-6], tris(3-trifluoromethylphenyl)borane [24455-00-3], tris(4-fluorophenyl)borane [47196-74-7], tris(2,6-difluorophenyl)borane [146355-09-1], tris(3,5-difluorophenyl)borane [154735-09-8], methyliumtriphenyl tetrakis(pentafluorophenyl)borate [136040-19-2], N,N-dimethylanilinium tetrakis(pentafluorophenyl)borate, and also mixtures of the above catalysts.

6. Process for the preparation of SiOC-linked, linear polydimethylsiloxane-polyoxyalkylene block copolymers according to Claim 1, **characterized in that** the amounts used of the catalyst are from 0.01 to 0.2% by weight, based on initial charge of hydrosiloxane and polyether.

7. Process for the preparation of SiOC-linked, linear polydimethylsiloxane-polyoxyalkylene block copolymers according to Claim 1, **characterized in that** the average molar mass of each siloxane block (A) (-R₂SiO-)_{b}, where R = CH₃-, is from 650 to 6000 g/mol.

8. Process for the preparation of SiOC-linked, linear polydimethylsiloxane-polyoxyalkylene block copolymers according to Claim 1, **characterized in that** the average molar mass of the siloxane blocks (X) (-R₂SiO-)ₐ, and (Y) (-R₂SiO-)ₐ where R = CH₃- is, independently of each other, from 74 to 518 g/mol, and the molar mass of X + Y is from 148 to 3000 g/mol.

9. Process for the preparation of SiOC-linked, linear polydimethylsiloxane-polyoxyalkylene block copolymers according to Claim 1, **characterized in that** the polyoxyalkylene block (B) contains mixed oxyethylene units and oxypropylene units (-CₙH₍₂ₙ₋₁₎R¹ₘO-)_{c} with an oxyethylene content of about 30 to 70% by weight and oxypropylene content of 70 to 30% by weight, based on the total content of oxyalkylene units in the block.

10. Process for the preparation of SiOC-linked, linear polydimethylsiloxane-polyoxyalkylene block copolymers according to Claim 1, **characterized in that** the average molar mass of each polyoxyalkylene block (B) (CₙH₍₂ₙ₋₁₎R¹ₘO)_{c} is from about 600 to 10 000 g/mol.

11. Process for the preparation of SiOC-linked, linear polydimethylsiloxane-polyoxyalkylene block copolymers according to Claim 1, **characterized in that** the content of the siloxane blocks A in the entire copolymer is from 20 to 50% by weight.

12. Process for the preparation of SiOC-linked, linear polydimethylsiloxane-polyoxyalkylene block copolymers according to Claim 1, **characterized in that** the average molar mass of the block copolymer is from 10 000 g/mol to about 1 600 000 g/mol.

13. SiOC-linked, linear polydimethylsiloxane-polyoxyalkylene block copolymers having (AB) repeat units, prepared by a process according to at least one of Claims 1 to 12.

14. Use of the SiOC-linked, linear polydimethylsiloxane-polyoxyalkylene block copolymers according to Claim 13 as surfactant additives for production of polyurethane ether foams.

## Revendications

1. Procédé de fabrication de copolymères séquencés polydiméthylsiloxane-polyoxyalkylène linéaires reliés à SiOC comprenant des unités de répétition (AB) par mise en réaction selon des procédés connus en soi de polyéther-diols avec un excès stoechiométrique d'α,ω-dihydrogéno-polydiméthylsiloxanes en présence d'un ou de plusieurs composés d'éléments du groupe principal III et/ou du groupe de transition 3 en tant que catalyseur, **caractérisé en ce que** la réaction est poursuivie après la transformation totale du composant alcool jusqu'à ce qu'aucun groupe =Si(H) ne soit plus détectable par volumétrie gazeuse.

2. Procédé de fabrication de copolymères séquencés polydiméthylsiloxane-polyoxyalkylène linéaires reliés à SiOC selon la revendication 1, **caractérisé en ce que** le rapport molaire entre les α,ω-hydrogénosiloxanes et les polyéther-diols se situe dans la plage allant de 1,10 à 2,00.

3. Procédé de fabrication de copolymères séquencés polydiméthylsiloxane-polyoxyalkylène linéaires reliés à SiOC selon la revendication 1, **caractérisé en ce que** la réaction est réalisée à des températures de 60 °C à 140 °C.

4. Procédé de fabrication de copolymères séquencés polydiméthylsiloxane-polyoxyalkylène linéaires reliés à SiOC selon la revendication 2, **caractérisé en ce qu'**un catalyseur contenant du bore et/ou contenant de l'aluminium est utilisé en tant que composés d'éléments du groupe principal III et/ou un catalyseur contenant du scandium, contenant de l'yttrium, contenant du lanthane et/ou contenant un lanthanide est utilisé en tant que composés d'éléments du groupe de transition 3.

5. Procédé de fabrication de copolymères séquencés polydiméthylsiloxane-polyoxyalkylène linéaires reliés à SiOC selon la revendication 1, **caractérisé en ce qu'**on utilise un catalyseur choisi dans le groupe :
(C₅F₄)(C₆F₅)₂B ; (C₅F₄) ₃B ; (C₆F₅) BF₂ ; BF (C₆F₅) ₂ ; B(C₆F₅)₃ ; BCl₂(C₆F₅) ; BCl(C₆F₅)₂ ; B(C₆H₅)(C₆F₅)₂ ; B(Ph)₂(C₆F₅) ; [C₆H₄(mCF₃)₂]₃B ; [C₆H₄(pOCF₃)₂]₃B ; (C₆F₅)B(OH)₂ ; (C₆F₅)₂BOH ; (C₆F₅)₂BH ; (C₆F₅) BH₂ ; (C₇H₁₁)B(C₆F₅)₂ ; (C₈H₁₄B) (C₆F₅) ; (C₆F₅)₂B(OC₂H₅) ; (C₆F₅) ₂B-CH₂CH₂Si(CH₃)₃ ; 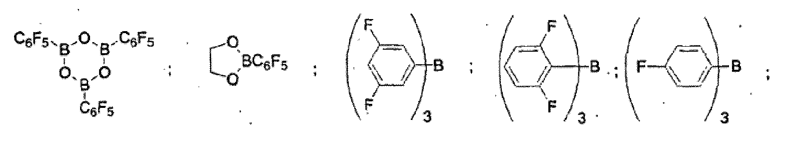 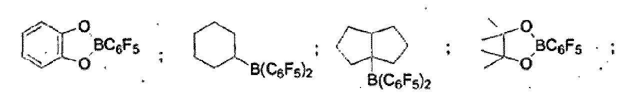 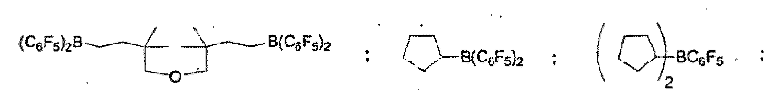 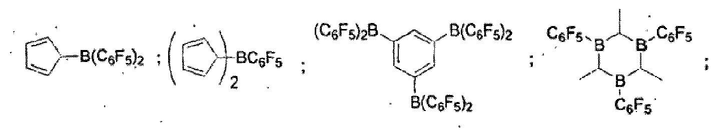 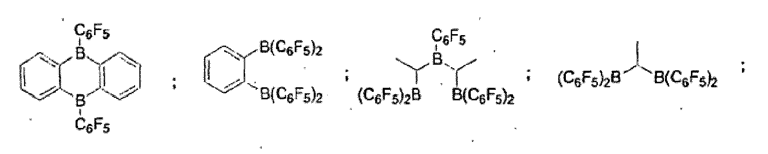 notamment le tris(perfluorotriphénylborane) [1109-15-5], l'éthérate de trifluorure de bore [109-63-7], le complexe borane-triphénylphosphine [2049-55-0], le triphénylborane [960-71-4], le triéthylborane [97-94-9] et le trichlorure de bore [10294-34-5], la tris(pentafluorophényl)-boroxine (9Cl) [223440-98-0], le 4,4,5,5,-tétraméthyl-2-(pentafluorophényl)-1,3,2-dioxaborolane (9 C l) [325142-81-2], le 2-(pentafluorophényl)-1,3,2-dioxaborolane (9Cl) [336880-93-4], le bis(pentafluorophényl)cyclohexylborane [245043-30-5], le di-2,4-cyclopentadién-1-yl(pentafluorophényl)-borane (9Cl) [336881-03-9], l'(hexa-hydro-3a(1H)-pentalényl)-bis (pentafluorophényl)borane (9Cl) [336880-98-9], le 1,3-[2-[bis(pentafluorophényl)boryl]éthyl]tétraméthyldisiloxan e [336880-99-0], la 2,4,6-tris(pentafluorophényl)borazine (7Cl, 8Cl, 9Cl) [1110-39-0], la 1,2-dihydro-2-(pentafluorophényl)-1,2-azaborine (9Cl) [336880-94-5], le 2-(pentafluorophényl)-1,3,2-benzodioxaborol (9Cl) [336880-96-7], le tris(4-trifluorométhoxyphényl)borane [336880-95-6], le tris(3-trifluorométhylphényl)borane [24455-00-3], le tris(4-fluorophényl)borane [47196-74-7], le tris(2,6-difluorophényl)borane [146355-09-1], le tris(3,5-difluorophényl)borane [154735-09-8], le borate de méthyliumtriphényltétrakis(pentafluorophényle) [136040-19-2], le borate de N,N-diméthylanilinium-tétrakis(pentyfluorophényle), ainsi que les mélanges des catalyseurs précédents.

6. Procédé de fabrication de copolymères séquencés polydiméthylsiloxane-polyoxyalkylène linéaires reliés à SiOC selon la revendication 1, **caractérisé en ce que** le catalyseur est utilisé en quantités de 0,01 à 0,2 % en poids, par rapport à l'hydrogénosiloxane et au polyéther chargés.

7. Procédé de fabrication de copolymères séquencés polydiméthylsiloxane-polyoxyalkylène linéaires reliés à SiOC selon la revendication 1, **caractérisé en ce que** le poids moléculaire moyen de chaque séquence siloxane (A) (-R₂SiO-)_{b} avec R = CH₃- est compris entre 650 et 6 000 g/mol.

8. Procédé de fabrication de copolymères séquencés polydiméthylsiloxane-polyoxyalkylène linéaires reliés à SiOC selon la revendication 1, **caractérisé en ce que** le poids moléculaire moyen des séquences siloxane (X) (-R₂SiO-)ₐ, (Y) (-R₂SiO-)ₑ avec R = CH₃- est indépendamment compris entre 74 et 518 g/mol et le poids moléculaire de X + Y est compris entre 148 et 3 000 g/mol.

9. Procédé de fabrication de copolymères séquencés polydiméthylsiloxane-polyoxyalkylène linéaires reliés à SiOC selon la revendication 1, **caractérisé en ce que** la séquence polyoxyalkylène (B) (-CₙH₍₂ₙ₋₁₎R¹ₘO-)_{c} contient des unités oxyéthylène et oxypropylène mixtes avec une proportion d'oxyéthylène d'environ 30 à 70 % en poids et une proportion d'oxypropylène de 70 à 30 % en poids, par rapport à la teneur totale en unités oxyalkylène de la séquence.

10. Procédé de fabrication de copolymères séquencés polydiméthylsiloxane-polyoxyalkylène linéaires reliés à SiOC selon la revendication 1, **caractérisé en ce que** le poids moléculaire moyen de chaque séquence polyoxyalkylène (B) (CₙH₍₂ₙ₋₁₎R¹ₘO)_{c} est compris entre environ 600 et 10 000 g/mol.

11. Procédé de fabrication de copolymères séquencés polydiméthylsiloxane-polyoxyalkylène linéaires reliés à SiOC selon la revendication 1, **caractérisé en ce que** la proportion des séquences siloxane A dans le copolymère total est comprise entre 20 et 50 % en poids.

12. Procédé de fabrication de copolymères séquencés polydiméthylsiloxane-polyoxyalkylène linéaires reliés à SiOC selon la revendication 1, **caractérisé en ce que** le copolymère séquencé présente un poids moléculaire moyen de 10 000 g/mol à environ 1 600 000 g/mol.

13. Copolymères séquencés polydiméthylsiloxane-polyoxyalkylène linéaires reliés à SiOC comprenant des unités de répétition (AB), fabriqués par un procédé selon au moins l'une quelconque des revendications 1 à 12.

14. Utilisation des copolymères séquencés polydiméthylsiloxane-polyoxyalkylène linéaires reliés à SiOC selon la revendication 13 en tant qu'additifs tensioactifs pour la fabrication de mousses d'éther de polyuréthane.
